# FASCICULE DE BREVET EUROPEEN

(11) **EP 4 488 115 B1**
(45) Date de publication et mention de la délivrance du brevet: **11.11.2026**
(21) Numéro de dépôt: 24181869.9
(22) Date de dépôt: 13.06.2024
(51) Int. Cl.: B60P 3/20, F25D 23/08, F16J 15/02, F16J 15/06, F25D 11/00

(54) **CARROSSERIE FRIGORIFIQUE DE VÉHICULE ROUTIER DE TRANSPORT DE MARCHANDISES ÉQUIPÉE D'UNE CLOISON DE COMPARTIMENTAGE**
KÜHLKAROSSERIE FÜR EIN STRASSENFAHRZEUG ZUM TRANSPORT VON GÜTERN MIT EINER UNTERTEILUNGSSCHOTT
REFRIGERATED BODY OF A ROAD VEHICLE FOR TRANSPORTING GOODS PROVIDED WITH A PARTITION WALL

(30) Priorité: 04.07.2023 FR 2307102
(43) Date de publication de la demande: 08.01.2025
(73) Titulaire: Jean Chereau SAS, 50220 DUCEY-LES-CHERIS (FR)
(72) Inventeur: LEBOURGEOIS, Fabien, 50530 LOLIF (FR); HEITZ, Nicolas, 35260 CANCALE (FR)
(74) Mandataire: Casalonga

(56) Documents cités:
- EP-B1- 3 699 027
- KR-B1- 101 552 710
- US-A- 5 984 601

## Description

La présente invention concerne le domaine des carrosseries frigorifiques destinées à être montées par exemple sur les châssis de véhicules routiers de transport de marchandises tels que des camions, des semi-remorques, des remorques ou des porteurs.

L'espace de chargement intérieur d'une carrosserie frigorifique est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut comprendre une porte à un ou plusieurs battants ou encore un rideau coulissant.

Une carrosserie frigorifique permet de transporter des marchandises ou des denrées périssables nécessitant d'être maintenues à une température constante, généralement inférieure à la température extérieure. Dans ce but, la carrosserie comprend un groupe ou machine frigorifique pour envoyer de l'air à température régulée à l'intérieur de l'espace de chargement.

Pour une carrosserie frigorifique, il peut être nécessaire de compartimenter l'espace de chargement compte tenu du volume important de cet espace. En outre, ceci permet de pouvoir disposer de plusieurs compartiments pouvant être maintenus à des températures différentes, par exemple pour le transport de différentes familles de marchandises. On parle alors de fonctionnement « multi-températures » de la carrosserie frigorifique.

Pour réaliser ce compartimentage, il est généralement utilisé au moins une cloison articulée à rotation sous le pavillon de la carrosserie et mobile entre une position de stockage le long dudit pavillon et une position rabattue d'utilisation dans laquelle elle s'étend verticalement jusqu'au plancher. La cloison de compartimentage est également montée coulissante à l'intérieur de l'espace de chargement de la carrosserie de sorte à pourvoir être positionnée à la position longitudinale souhaitée. Pour assurer le montage coulissant et rotatif de la cloison, il est prévu un mécanisme de guidage et d'articulation reliant cette cloison au pavillon de la carrosserie.

La cloison de compartimentage est équipée d'une paroi de compartimentage et de joints d'étanchéité périphériques permettant d'assurer une bonne isolation thermique entre les compartiments délimités à l'intérieur de la carrosserie par la cloison dans sa position d'utilisation.

Classiquement, les joints d'étanchéité périphériques de la cloison de compartimentage sont réalisés monoblocs et collés sur la paroi de compartimentage. Les joints d'étanchéité sont soumis à des frottements contre les flancs, le plancher et le plafond de la carrosserie, ce qui provoque leur usure. En outre, les joints d'étanchéité périphériques ont tendance à geler au contact de ces parois de la carrosserie, ce qui accentue leur usure pouvant conduire à leur déchirure. Ceci dégrade fortement leur efficacité ou les rendent inopérants. EP 3 699 027 B1 divulgue une carrosserie frigorifique selon le préambule de la revendication 1.

En pratique, le remplacement des joints d'étanchéité nécessite au moins le démontage de la cloison de compartimentage, voire le démontage de la cloison et du mécanisme de guidage et d'articulation associé.

Ces opérations nécessitent de devoir être réalisées par une main d'œuvre qualifiée, mais engendre surtout l'immobilisation du véhicule équipé de la carrosserie qui entraine une perte d'exploitation et un coût particulièrement important.

La présente invention vise à remédier à ces inconvénients.

L'invention a pour objet une carrosserie frigorifique de véhicule routier de transport de marchandises comprenant deux flancs verticaux, un pavillon et un plancher assemblés entre eux et formant les parois de ladite carrosserie qui délimitent en partie un espace de chargement intérieur, et au moins une cloison de compartimentage mobile longitudinalement à l'intérieur de l'espace de chargement intérieur et déplaçable entre une position de rangement et une position d'utilisation pour le compartimentage de l'espace de chargement.

Le sens « longitudinal » relatif au déplacement de ladite cloison de compartimentage est utilisé en considérant le sens de la longueur de la carrosserie.

Ladite cloison de compartimentage comprend une paroi de compartimentage et une pluralité de joints d'étanchéité montés sur le pourtour de la paroi de compartimentage pour former une ceinture d'étanchéité périphérique.

Selon une caractéristique générale, au moins l'un des joints d'étanchéité de ladite cloison de compartimentage comprend une embase fixée sur la paroi de compartimentage, et une garniture d'étanchéité fixée sur l'embase de manière amovible.

Ledit joint d'étanchéité est ainsi réalisée en plusieurs parties, dont la garniture d'étanchéité qui peut être séparée de l'embase pour être remplacée en cas d'usure. Le remplacement de la garniture d'étanchéité peut être réalisée directement à l'intérieur de la carrosserie sans démontage de la cloison de compartimentage ni du mécanisme de guidage et d'articulation associé.

Par ailleurs, avec la conception dudit joint d'étanchéité, il devient possible de pouvoir prévoir une embase rigide et une garniture d'étanchéité au moins en partie souple. Ceci permet d'améliorer la fixation du joint d'étanchéité sur la paroi de compartimentage de la cloison, et l'étanchéité avec la paroi de la carrosserie, ou avec l'autre cloison, contre laquelle la garniture est en contact de friction.

Selon une caractéristique générale, la garniture d'étanchéité dudit joint d'étanchéité est pourvue d'une partie de fixation fixée sur l'embase dudit joint d'étanchéité de manière amovible et réalisée en matériau rigide, et d'au moins une lèvre d'étanchéité s'étendant en saillie par rapport à la partie de fixation du côté opposé à la paroi de compartimentage et réalisée en matériau souple. Le ou les lèvres d'étanchéité peuvent s'étendre à partir de la partie de fixation.

Ceci permet d'obtenir un bon compromis entre la fixation de la garniture d'étanchéité sur l'embase et l'étanchéité avec la paroi ou la cloison associée.

L'embase et la garniture d'étanchéité dudit joint d'étanchéité sont réalisés au moins en partie dans deux matériaux différents.

Lorsque la carrosserie est équipée d'une unique cloison de compartimentage, la garniture d'étanchéité dudit joint d'étanchéité vient en contact contre l'une des parois de ladite carrosserie dans la position d'utilisation de la cloison.

Lorsque la carrosserie est équipée de plusieurs cloisons de compartimentage, la garniture d'étanchéité dudit joint d'étanchéité vient en contact contre l'une des parois de ladite carrosserie ou contre l'autre cloison.

L'embase dudit joint d'étanchéité peut recouvrir au moins en partie un chant de la paroi de compartimentage. Dans un mode de réalisation, l'embase dudit joint d'étanchéité est montée en appui contre ledit chant de la paroi de compartimentage. Alternativement, l'embase peut rester à distance dudit chant.

Avantageusement, la retenue de la garniture d'étanchéité relativement à l'embase dudit joint d'étanchéité est réalisée par complémentarité de forme de la garniture d'étanchéité et de l'embase. La retenue s'effectue selon une direction perpendiculaire à la direction de coulissement de la garniture d'étanchéité à l'intérieur de la rainure.

Dans ce but, l'embase dudit joint d'étanchéité peut être pourvue d'au moins une nervure s'étendant en saillie à l'intérieur d'une partie complémentaire de la garniture d'étanchéité et comprenant au moins un élément d'accrochage coopérant avec celle-ci.

Alternativement, la garniture d'étanchéité peut être pourvue de ladite nervure dont ledit élément d'accrochage coopère avec l'embase.

Selon une conception avantageuse, l'embase dudit joint d'étanchéité délimite, du côté opposé au chant de la paroi de compartimentage, au moins une rainure s'étendant le long dudit chant et à l'intérieur de laquelle est engagée de manière coulissante la garniture d'étanchéité. Ladite rainure présente au moins une extrémité longitudinale ouverte vers l'extérieur.

Le sens « longitudinal » relatif à l'extrémité de la rainure est utilisé en considérant le sens de la longueur de cette rainure.

Cette conception permet de pouvoir assembler la garniture d'étanchéité sur l'embase de fixation par glissement à partir de l'extrémité longitudinale ouverte de la rainure. Ceci facilite encore les opérations de remplacement de la garniture d'étanchéité à l'intérieur de la carrosserie.

Alternativement, il reste cependant possible de prévoir un autre mode d'assemblage de la garniture d'étanchéité dudit joint sur l'embase, par exemple par clipsage.

La partie de fixation de la garniture d'étanchéité peut être engagée de de manière coulissante à l'intérieur de ladite rainure de l'embase dudit joint d'étanchéité

Dans un mode de réalisation particulier, la partie de fixation de la garniture d'étanchéité comprend au moins une rainure à l'intérieur de laquelle s'engage de manière coulissante ladite nervure de l'embase.

Alternativement, il est possible de prévoir une disposition inversée de la rainure et de ladite nervure en les prévoyant respectivement sur l'embase et sur la partie de fixation de la garniture d'étanchéité.

De préférence, l'embase dudit joint d'étanchéité est pourvue d'une paroi de fond s'étendant au moins en partie le long d'un chant de la paroi de compartimentage. La paroi de fond peut délimiter en partie ladite rainure.

Avantageusement, l'embase dudit joint d'étanchéité peut être pourvue en outre de deux ailes frontales prolongeant la paroi de fond et s'étendant du côté de la paroi de compartimentage. Chaque aile peut être continu ou discontinue dans le sens de sa longueur.

Selon une première conception, les deux ailes frontales de l'embase dudit joint d'étanchéité sont respectivement montées en appui contre des faces principales opposées de la paroi de compartimentage délimitant l'épaisseur de ladite paroi.

Selon une deuxième conception alternative, les deux ailes frontales de l'embase sont noyées à l'intérieur de l'épaisseur de la paroi de compartimentage. Ainsi, les ailes frontales de l'embase remplissent une fonction d'élément de structure de la cloison. Ceci permet de rigidifier la cloison.

Dans un mode de réalisation, l'embase et la garniture d'étanchéité dudit joint d'étanchéité laissent subsister entre eux au moins un espace vide. Cet espace permet de pouvoir loger une ou plusieurs têtes de vis si la fixation de l'embase du joint d'étanchéité sur la paroi de la cloison est réalisée par vissage. Ledit espace vide peut être ménagé entre l'embase et la garniture d'étanchéité dudit joint d'étanchéité.

La ceinture d'étanchéité périphérique formée par la pluralité de joints d'étanchéité de ladite cloison de compartimentage peut être continue ou discontinue le long du pourtour de la paroi de compartimentage.

La carrosserie frigorifique comprend une machine frigorifique pour contrôler la température à l'intérieur de l'espace de chargement. La machine frigorifique est fixée sur une des parois de la carrosserie.

On entend « par machine frigorifique », une machine permettant d'envoyer un gaz à température contrôlée à l'intérieur de l'espace de chargement de la carrosserie. La machine frigorifique peut par exemple être une machine frigorifique à moteur thermique, une machine frigorifique à moteur électrique, une machine frigorifique hybride ou encore une machine frigorifique fonctionnant sur le principe de la cryogénie, par exemple à l'azote ou au dioxyde de carbone.

La présente invention sera mieux comprise à la lecture de la description détaillée de modes de réalisation pris à titre d'exemples nullement limitatifs et illustrés par les dessins annexés sur lesquels :
[Fig 1]
[Fig 2] sont des vues en coupe longitudinale de l'intérieur d'une carrosserie frigorifique selon un exemple de réalisation de l'invention,
[Fig 3] est une vue en perspective partielle de la carrosserie des figures 1 et 2 illustrant schématiquement des cloisons de compartimentage de celle-ci,
[Fig 4] est une vue en perspective d'un des joints d'étanchéité d'une des cloisons de compartimentage de la figure 3,
[Fig 5] est une vue en coupe du joint d'étanchéité de la figure 4, et
[Fig 6]

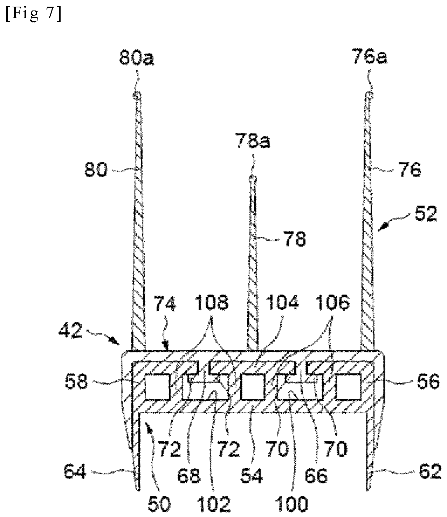

[Fig 7] sont des vues en coupe de joints d'étanchéité de cloisons de compartimentage selon d'autres exemples de réalisation de l'invention.

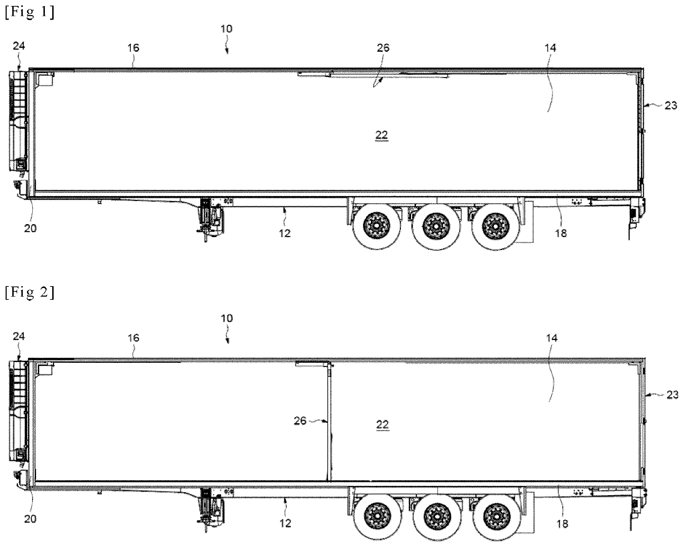

Sur les figures 1 et 2, on a représenté une carrosserie frigorifique, référencée 10 dans son ensemble, montée sur un châssis 12 porteur de véhicule de transport routier s'étendant longitudinalement et équipé de roues.

La carrosserie 10 comprend deux flancs 14 verticaux opposés s'étendant longitudinalement (un seul étant visible sur les figures), un plafond ou pavillon 16, un plancher 18, une face avant 20 et un cadre arrière nommé custode (non visible) qui sont assemblés entre eux. Les flancs 14 verticaux, le pavillon 16 le plancher 18 et la face avant 20 forment les parois de ladite carrosserie qui délimitent un espace de chargement 22 intérieur.

De manière connue en soi, la carrosserie 10 comprend également un dispositif de fermeture (non référencé) d'une ouverture ou accès arrière à l'espace de chargement intérieur. Le dispositif peut être une porte à un ou plusieurs battants articulés à rotation ou encore un rideau coulissant.

La carrosserie 10 comprend encore un groupe ou machine frigorifique 24 pour envoyer de l'air à température régulée à l'intérieur de l'espace de chargement 22. L'air est extrait de l'espace de chargement 22 par la machine frigorifique 24 et, après mise à température, réinjecté dans cet espace. La machine frigorifique 24 est fixée ici sur la face avant 20 de la carrosserie à l'extérieur de l'espace de chargement. En variante, il est possible de monter la machine frigorifique 24 sur une des autres parois de la carrosserie 10, par exemple sur le pavillon 16 ou sur le plancher 18.

La carrosserie 10 comprend également des cloisons 26 de compartimentage de l'espace de chargement 22 intérieur qui sont prévues pour délimiter deux compartiments à l'intérieur dudit espace. Chaque cloison 26 s'étend transversalement en considérant le sens de la longueur de la carrosserie 10.

Chaque cloison 26 est montée sur le pavillon 16. Chaque cloison 26 est mobile à rotation entre une position relevée de stockage ou de rangement le long du pavillon 16 (figure 1) et une position abaissée de séparation ou d'utilisation (figure 2) dans laquelle deux compartiments sont délimités longitudinalement de part et d'autre des cloisons 26 à l'intérieur de l'espace de chargement 22. Les cloisons 26 s'étendent verticalement jusqu'au plancher 18 dans la position abaissée d'utilisation. Chaque cloison 26 s'étend transversalement entre les flancs 14.

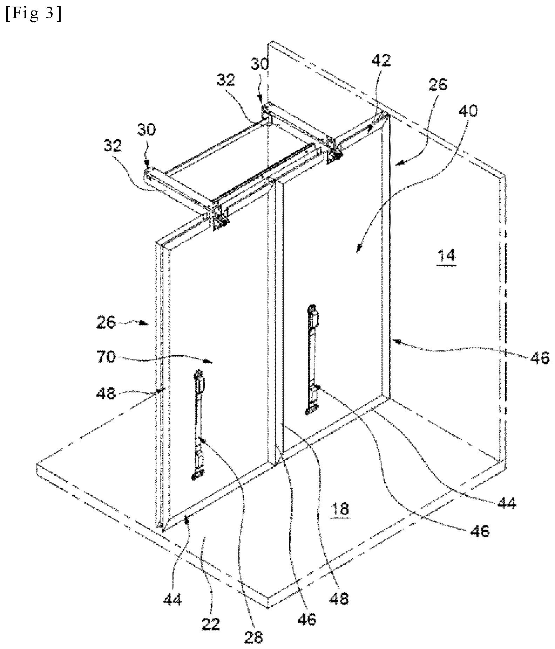

Comme illustré à la figure 3, dans l'exemple de réalisation illustré, la carrosserie 10 comprend deux cloisons 26 transversales pour créer deux compartiments avant et arrière distincts à l'intérieur de l'espace de chargement 22 intérieur. Les cloisons 26 sont identiques. En variante, la carrosserie 10 peut comprendre une unique cloison 26 s'étendant transversalement d'un flanc 14 à l'autre flanc 14 opposé, ou encore trois cloisons.

Une sangle 28 de manipulation est prévue sur chaque cloison 26 pour pouvoir réaliser manuellement le passage de la position abaissée vers la position relevée de stockage.

Chaque cloison 26 est également montée coulissante à l'intérieur de l'espace de chargement de la carrosserie de sorte à pourvoir être positionnée dans cet espace à la position longitudinale souhaitée.

Pour assurer le montage coulissant et rotatif de chaque cloison 26, il est prévu un mécanisme 30 de guidage et d'articulation de celle-ci. Chaque mécanisme 30 comprend un rail de guidage (non visible) fixé sur le pavillon de la carrosserie, et un chariot 32 monté de façon coulissante à l'intérieur du rail et supportant la cloison 26 associée. Le chariot 32 permet de positionner la cloison 26 associée dans l'espace de chargement intérieur de la carrosserie à la position longitudinale souhaitée. Chaque mécanisme 30 comprend également deux bras (non référencés) articulés à rotation sur le chariot 32 autour d'un axe horizontal pour le support et le montage rotatif de la cloison 26 associée. Les bras de chaque mécanisme 30 sont fixés à la cloison 26 associée en partie supérieure de celle-ci.

Chaque cloison 26 comprend un panneau ou paroi 40 pour assurer la fonction de séparation ou compartimentage de ladite cloison. La paroi 40 de chaque cloison est pourvue de deux faces principales opposées délimitant l'épaisseur de celle-ci. Dans la position abaissée d'utilisation de la cloison 26, ces faces principales opposées forment des faces arrière et avant de la paroi 40. Dans l'exemple de réalisation illustré, les faces avant et arrière de la paroi 40 sont planes. La paroi 40 est d'épaisseur constante.

La paroi 40 de chaque cloison est également pourvue de deux chants latéraux et de deux chants transversaux. Chaque chant transversal s'étend entre deux extrémités des chants latéraux. Dans la position abaissée d'utilisation de la cloison 26, les chants latéraux s'étendent verticalement et les chants transversaux s'étendent horizontalement et forment des chants supérieur et inférieur. Les chants latéraux de la paroi 40 délimitent la cloison dans le sens transversal et les chants transversaux délimitent la hauteur de la cloison.

Chaque cloison 26 comprend également des joints 42 à 48 d'étanchéité montés sur le pourtour de la paroi 40 de compartimentage de sorte à former une ceinture d'étanchéité périphérique. Le joint 42 d'étanchéité supérieur est fixé sur le chant supérieur de la paroi 40, et le joint 44 d'étanchéité inférieur est fixé sur le chant inférieur. Les joints 46, 48 d'étanchéité latéraux sont fixés sur les chants latéraux de la paroi 40.

Les joints 44 à 48 d'étanchéité recouvrent entièrement les chants inférieur et latéraux associés de la paroi 40. Dans l'exemple de réalisation illustré, le joint 42 d'étanchéité supérieur est discontinu de sorte à laisser subsister un espace pour la fixation des bras du mécanisme 30 à la paroi 40 de compartimentage.

Dans la position abaissée de chaque cloison 26, les joints 42 supérieur et 44 inférieur sont respectivement en contact contre le pavillon et le plancher 18. Dans cette position abaissée, le joint 46 latéral d'une cloison et le joint 48 latéral de l'autre cloison sont en contact contre les flancs 14, et les deux autres joints 48, 46 latéraux viennent en contact entre eux. Si la carrosserie 10 est équipée d'une unique cloison 26, chaque joint 46, 48 latéral est en contact contre l'un des flancs 14.

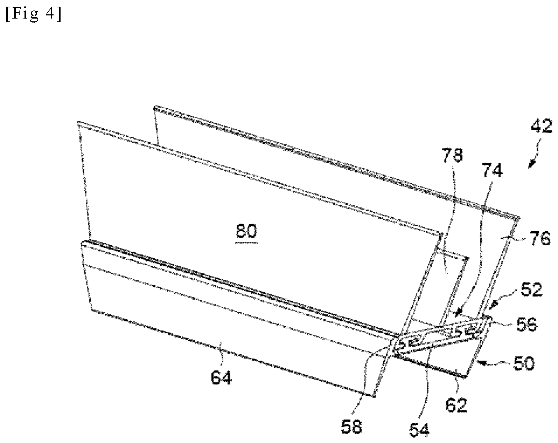

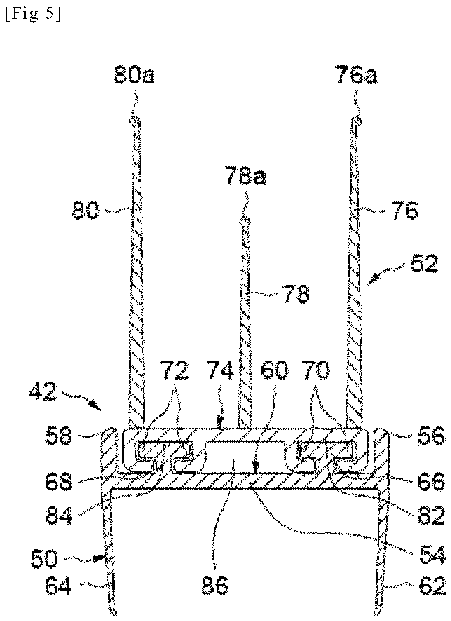

En référence aux figures 4 et 5, il va maintenant être décrit uniquement le joint 42 d'étanchéité supérieur d'une des cloisons 26 située, étant entendu que les autres joints 44 à 48 de cette cloison ainsi que les joints de l'autre cloison 26 sont de conception identique.

Le joint 42 d'étanchéité comprend une embase 50 fixée sur la paroi (non représentée) de la cloison, et une garniture 52 d'étanchéité venant en contact contre le pavillon de la carrosserie.

La garniture 52 d'étanchéité est fixée sur l'embase 50 de manière amovible. La garniture 52 peut ainsi être séparée de l'embase 50. La garniture 52 d'étanchéité est fixée uniquement sur l'embase 50. Autrement dit, il n'existe aucune fixation directe entre la garniture 52 et la paroi 40 de la cloison. La garniture 52 est fixée sur la paroi 40 par l'intermédiaire de l'embase 50.

L'embase 50 du joint d'étanchéité est fixée sur le chant transversal associé de la paroi 40. L'embase 50 assure la fixation du joint 42 d'étanchéité sur la paroi 40. L'embase 50 est pourvue d'une paroi de fond 54 montée en appui contre le chant transversal associé de la paroi 40. La paroi de fond 54 s'étend le long du chant transversal. Préférentiellement, la paroi de fond 54 s'étend sur toute la longueur du chant latéral. La paroi de fond 54 recouvre également la totalité de la transversal du chant latéral de la paroi 40.

L'embase 50 est pourvue en outre de deux rebords 56, 58 d'extrémité frontaux prolongeant la paroi de fond 54 et s'étendant du côté opposé à la paroi de la cloison. Les rebords 56, 58 s'étendent le long de la paroi de fond 54. Préférentiellement, les rebords 56, 58 s'étendent sur toute la longueur de la paroi de fond 54. Dans la position abaissée de la cloison, les rebords 56, 58 forment des rebords avant et arrière.

Sur l'embase 50 est délimitée une rainure 60 à l'intérieur de laquelle est engagée la garniture 52 d'étanchéité. La rainure 60 s'étend le long de la paroi de fond 54 et du chant transversal associé de la paroi 40. La rainure 60 est ouverte vers l'extérieur du côté opposé à la paroi de la cloison. La rainure 60 est également ouverte vers l'extérieur à chaque extrémité longitudinale de l'embase 50.

La rainure 60 est délimitée par la paroi de fond 54 et par les rebords 56, 58. Dans l'exemple de réalisation illustré, la rainure présente en section une forme en U. Alternativement, il est possible de prévoir d'autre formes pour la rainure, par exemple une forme en V.

L'embase 50 du joint d'étanchéité est également pourvue de deux ailes 62, 64 frontales prolongeant la paroi de fond 54 et s'étendant du côté de la paroi de la cloison. Les ailes 62, 64 s'étendent le long de la paroi de fond 54. Préférentiellement, les ailes 62, 64 s'étendent sur toute la longueur de la paroi de fond 54. Dans la position abaissée de la cloison, les ailes 62, 64 forment des ailes avant et arrière. Dans l'exemple de réalisation illustré, les ailes 62, 64 sont respectivement prévues pour être plaquer contre les faces avant et arrière de la paroi de la cloison. La paroi de fond 54 et les ailes 62, 64 forment un cadre de montage de l'embase sur la paroi de la cloison.

La garniture 52 d'étanchéité est engagée de manière coulissante à l'intérieur de la rainure 60 de l'embase. Lors du montage, la garniture 52 d'étanchéité est montée par coulissement à l'intérieur de la rainure 60 de l'embase. Lors de ce montage, la garniture 52 d'étanchéité est introduite à l'intérieur de la rainure 60 par une de ses extrémités longitudinales. En cas d'usure de la garniture 52 d'étanchéité, celle-ci est retirée de de la rainure 60 de l'embase également par coulissement.

L'embase 50 du joint d'étanchéité est également pourvue de deux nervures 66, 68 s'étendant à l'intérieur de la rainure 60 le long de celle-ci. Les nervures 66, 68 sont espacées l'une de l'autre. Les nervures 66, 68 s'étendent en saillie à partir de la paroi de fond 54. Les nervures 66, 68 s'étendent transversalement par rapport à la paroi de de fond 54. Dans l'exemple de réalisation illustré, les nervures 66, 68 sont au nombre de deux. Alternativement, il est possible de prévoir un nombre différent de nervures, par exemple une unique nervure ou encore trois nervures.

Afin d'assurer la retenue latérale de la garniture 52 d'étanchéité relativement à l'embase 50, chaque nervure 66, 68 est pourvue de rebords 70, 72 d'accrochage opposés s'étendant transversalement en saillie par rapport à ladite nervure. Les rebords 70, 72 d'accrochage sont ménagés à l'extrémité libre de la nervure 66, 68 associée. Chaque nervure 66, 68 et les rebords 70, 72 d'accrochage associés forment un moyen de retenue de la garniture 52 d'étanchéité. Chaque nervure 66, 68 et les rebords 70, 72 associés coopèrent avec la garniture 52 d'étanchéité pour assurer sa retenue relativement à l'embase.

La garniture 52 d'étanchéité du joint est pourvue d'une partie de fixation 74 engagée de manière coulissante à l'intérieur de la rainure 60 de l'embase, et de lèvres d'étanchéité 76, 78 et 80 s'étendant en saillie par rapport à la partie de fixation 74 du côté opposé à la paroi 40 de la cloison. Les lèvres d'étanchéité 76, 78 et 80 sont solidaires de la partie de fixation 74.

Comme cela sera décrit par la suite, dans l'exemple de réalisation illustré, la partie de fixation 74 et les lèvres d'étanchéité 76, 78 et 80 de la garniture d'étanchéité du joint sont réalisés dans des matériaux différents.

Les lèvres d'étanchéité 76 à 80 s'étendent à partir de la partie de fixation 74. Les lèvres d'étanchéité 76 à 80 viennent en contact de frottement avec le pavillon de la carrosserie. L'épaisseur de chaque lèvre d'étanchéité 76 à 80 diminue en direction de son extrémité libre. Ceci favorise le caractère déformable des lèvres d'étanchéité 76 à 80 lorsqu'elles viennent en appui contre le pavillon de la carrosserie.

Dans l'exemple de réalisation illustré, chaque lèvre d'étanchéité 76 à 80 comprend, à son extrémité libre, une protubérance 76a à 80a sphérique d'épaisseur accrue par rapport à la zone immédiatement adjacente de la lèvre d'étanchéité. Les protubérances 76a à 80a permettent de limiter les contacts linéiques avec le pavillon de la carrosserie et de minimiser ainsi l'usure.

Dans l'exemple de réalisation illustré, la garniture 52 d'étanchéité est pourvue de trois lèvres d'étanchéité 76 à 80. Alternativement, il est possible de prévoir un nombre différent de lèvres, par exemple une ou deux lèvres, ou plus de trois lèvres.

La partie de fixation 74 de la garniture d'étanchéité du joint coopère par complémentarité de forme avec l'embase 50 pour assurer la retenue latérale de la garniture d'étanchéité à l'intérieur de la rainure 60. La partie de fixation 74 coopère par complémentarité de forme avec les nervures 66, 68 et les rebords 70, 72 d'accrochage de l'embase. A cet effet, dans l'exemple de réalisation illustré, la partie de fixation 74 comprend deux rainures 82, 84 à l'intérieur de chacune desquelles s'engage de manière coulissante une des nervures 66, 68. Les rebords 70, 72 d'accrochage assurent la retenue latérale de la garniture d'étanchéité à l'intérieur de la rainure 60 de l'embase. La forme de la rainure 82, 84 est complémentaire à celles de la nervure 66, 68 et des rebords 70, 72 d'accrochage.

Dans l'exemple de réalisation illustré, la paroi de fond 54 de l'embase et la partie de fixation 74 de la garniture d'étanchéité du joint laissent subsister entre eux à l'intérieur de la rainure 60 un espace 86 vide qui s'étend longitudinalement. Cet espace 86 permet de pouvoir loger une ou plusieurs têtes de vis si la fixation de l'embase 50 du joint d'étanchéité sur la paroi de la cloison est réalisée par vissage de la paroi de fond 54.

Comme indiqué précédemment, dans l'exemple de réalisation illustré, la partie de fixation 74 et les lèvres d'étanchéité 76, 78 et 80 de la garniture d'étanchéité du joint sont réalisés dans des matériaux différents.

La partie de fixation 74 est réalisée en matériau rigide et les lèvres d'étanchéité 76, 78 et 80 sont réalisée en matériau souple. A titre indicatif, la partie de fixation 74 peut être réalisée en PVC et les lèvres d'étanchéité 76, 78 et 80 en élastomère, par exemple en TPE. La garniture 52 d'étanchéité du joint peut être réalisée par coextrusion.

L'embase 50 du joint d'étanchéité est réalisée en matériau rigide. A titre indicatif, l'embase 50 peut être réalisée en PVC.

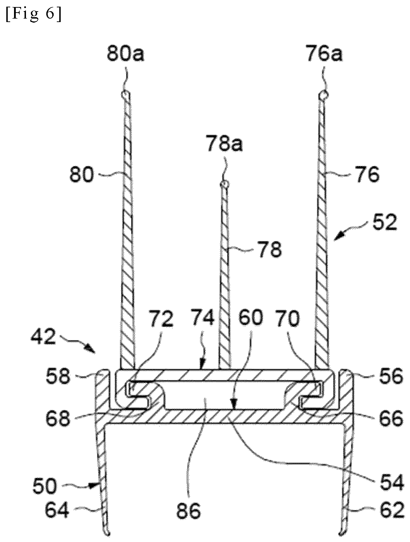

L'exemple de réalisation illustré à la figure 6, sur laquelle les éléments identiques portent les mêmes références, diffère de l'exemple de réalisation précédent par la conception de l'embase 50 et de la garniture 52 d'étanchéité du joint d'étanchéité. Dans cet exemple, chaque nervure 66, 68 est pourvue d'un seul rebord 70, 72 d'accrochage et la forme de la partie de fixation 74 de la garniture d'étanchéité est modifiée en conséquence.

L'exemple de réalisation illustré à la figure 7, sur laquelle les éléments identiques portent les mêmes références, diffère du premier exemple notamment par la conception de l'embase 50 du joint d'étanchéité.

Dans cet exemple de réalisation, deux rainures 100, 102 sont délimitées sur l'embase 50 à l'intérieur desquelles est engagée de manière coulissante la garniture 52 d'étanchéité.

Chaque rainure 100, 102 s'étend le long de la paroi de fond 54 et du chant latéral associé de la paroi de la cloison. Chaque rainure 100, 102 est ouverte vers l'extérieur du côté opposé à la paroi 40. Chaque rainure 100, 102 est également ouverte vers l'extérieur à chaque extrémité longitudinale de l'embase 50. Lors du montage, la garniture 52 d'étanchéité est introduite à l'intérieur de chaque rainure 100, 102 à une de ses extrémités longitudinales.

Dans cet exemple de réalisation, l'embase 50 comprend en outre une paroi frontale 104 décalée vers l'extérieur par rapport à la paroi de fond 54 et s'étendant le long de cette paroi frontale. La paroi frontale 104 est espacée et parallèle de la paroi de fond 54. La paroi frontale 104 est reliée aux rebords 56, 58.

L'embase 50 comprend en outre deux paires de cloisons internes 106, 108 s'étendant transversalement entre les parois frontale 104 et de fond 54 en étant reliées auxdites parois.

La rainure 100 est délimitée par la paroi de fond 54 et par les cloisons internes 106, et débouche sur la paroi frontale 104. De façon identique, la rainure 102 est délimitée par la paroi de fond 54 et par les cloisons internes 108, et débouche sur la paroi frontale 104.

Dans cet exemple de réalisation, les nervures 66, 68 sont prévues sur la partie de fixation 74 de la garniture d'étanchéité. La nervure 66, 68 s'étend à l'intérieur de la rainure 100, 102 de l'embase le long de celle-ci. Les nervures 66, 68 s'étendent en saillie à partir de la partie de fixation 74 de la garniture d'étanchéité. Les nervures 66, 68 s'étendent transversalement par rapport à la partie de fixation 74. La retenue latérale de la garniture 52 d'étanchéité relativement à l'embase 50 est réalisée par la coopération des rebords 70, 72 des nervures avec la paroi frontale 104. Dans cet exemple de réalisation, la partie de fixation 74 recouvre les rebords 56, 58 et une partie des ailes 62, 64.

Dans les exemples de réalisation illustrés, Comme indiqué précédemment, les ailes 62, 64 de l'embase du joint sont respectivement plaquées contre les faces avant et arrière de la paroi de la cloison. En variante, il pourrait être possible de prévoir de noyer les ailes 62, 64 de l'embase du joint d'étanchéité à l'intérieur de l'épaisseur de la paroi de la cloison de compartimentage.

L'invention a été illustrée à titre d'exemple sur la base d'une carrosserie de véhicule routier de transport du type semi-remorque. L'invention est aussi applicable à une carrosserie de véhicule routier de transport du type porteur, camion ou remorque.

## Revendications

1. Carrosserie frigorifique de véhicule routier de transport de marchandises comprenant :
- deux flancs (14) verticaux, un pavillon (16) et un plancher (18) assemblés entre eux et formant les parois de ladite carrosserie qui délimitent en partie un espace de chargement (22) intérieur, et
- au moins une cloison de compartimentage (26) mobile longitudinalement à l'intérieur de l'espace de chargement (22) et déplaçable entre une position de rangement et une position d'utilisation pour le compartimentage de l'espace de chargement, ladite cloison de compartimentage (26) comprenant une paroi de compartimentage (40) et une pluralité de joints d'étanchéité (42, 44, 46, 48) montés sur le pourtour de la paroi de compartimentage (40) pour former une ceinture d'étanchéité périphérique, **caractérisée en ce qu'**au moins l'un des joints d'étanchéité (42, 44, 46, 48) de ladite cloison de compartimentage (26) comprend une embase (50) fixée sur la paroi de compartimentage (40) **caractérisé en ce que**
le ou les joints d'étanchéité comprennent en outre une garniture d'étanchéité (52) fixée sur l'embase de manière amovible, la garniture d'étanchéité (52) étant pourvue d'une partie de fixation (74) fixée sur l'embase (50) dudit joint d'étanchéité de manière amovible et réalisée en matériau rigide, et d'au moins une lèvre d'étanchéité (76) s'étendant en saillie par rapport à la partie de fixation (74) du côté opposé à la paroi de compartimentage (40) et réalisée en matériau souple.

2. Carrosserie frigorifique selon la revendication 1, dans laquelle l'embase (50) dudit joint d'étanchéité est rigide et la garniture d'étanchéité (52) est au moins en partie souple.

3. Carrosserie frigorifique selon la revendication 1 ou 2, dans laquelle la retenue de la garniture d'étanchéité (52) relativement à l'embase (50) dudit joint d'étanchéité est réalisée par complémentarité de forme de la garniture d'étanchéité (52) et de l'embase (50).

4. Carrosserie frigorifique selon l'une quelconque des revendications précédentes, dans laquelle l'embase (50) dudit joint d'étanchéité recouvre au moins en partie un chant de la paroi de compartimentage (40).

5. Carrosserie frigorifique selon la revendication 4, dans laquelle l'embase (50) dudit joint d'étanchéité délimite, du côté opposé au chant de la paroi de compartimentage (40), au moins une rainure (60 ; 100, 102) s'étendant le long dudit chant et à l'intérieur de laquelle est engagée de manière coulissante la garniture d'étanchéité (52), ladite rainure (60 ; 100, 102) présentant au moins une extrémité longitudinale ouverte vers l'extérieur.

6. Carrosserie frigorifique selon la revendication 5, dans laquelle l'embase (50) dudit joint d'étanchéité est pourvue d'au moins une nervure (66) s'étendant en saillie à l'intérieur de ladite rainure (60) et comprenant au moins un élément d'accrochage (70) coopérant avec la garniture d'étanchéité (52).

7. Carrosserie frigorifique selon la revendication 5 ou 6, dans laquelle la partie de fixation (74) de la garniture d'étanchéité est engagée de manière coulissante à l'intérieur de ladite rainure (60 ; 100, 102) de l'embase (50) dudit joint d'étanchéité

8. Carrosserie frigorifique selon la revendication 7, dans laquelle la partie de fixation (74) de la garniture d'étanchéité (52) comprend au moins une rainure (82) à l'intérieur de laquelle s'engage de manière coulissante ladite nervure (66) de l'embase.

9. Carrosserie frigorifique selon l'une quelconque des revendications précédentes, dans laquelle l'embase (50) dudit joint d'étanchéité est pourvue d'une paroi de fond (54) s'étendant au moins en partie le long d'un chant de la paroi de compartimentage (40).

10. Carrosserie frigorifique selon la revendication 9, dans laquelle l'embase (50) dudit joint d'étanchéité est pourvue en outre de deux ailes frontales (62, 64) prolongeant la paroi de fond (54) et s'étendant du côté de la paroi de compartimentage (40).

11. Carrosserie frigorifique selon la revendication 10, dans laquelle les deux ailes frontales (62, 64) de l'embase (50) dudit joint d'étanchéité sont respectivement montées en appui contre des faces principales opposées de la paroi de compartimentage (40) délimitant l'épaisseur de ladite paroi.

12. Carrosserie frigorifique selon la revendication 10, dans laquelle les deux ailes frontales (62, 64) de l'embase (50) dudit joint d'étanchéité sont noyées à l'intérieur de l'épaisseur de la paroi de compartimentage (40).

13. Carrosserie frigorifique l'une quelconque des revendications, dans laquelle l'embase et la garniture d'étanchéité (52) dudit joint d'étanchéité laissent subsister entre eux au moins un espace vide (86).

## Patentansprüche

1. Kühlaufbau eines Straßenfahrzeugs zum Transport von Gütern, umfassend:
- zwei vertikale Seitenwände (14), ein Dach (16) und einen Boden (18), die miteinander verbunden sind und die Wände des Kühlaufbaus bilden, welche einen Innenladeraum (22) teilweise begrenzen; und
- mindestens eine Trennwand (26), die innerhalb des Laderaums (22) in Längsrichtung bewegbar und zwischen einer Verstauposition und einer Gebrauchsposition zur Unterteilung des Laderaums bewegbar ist, wobei die Trennwand (26) eine Trennwandplatte (40) und eine Vielzahl von Dichtungselementen (42, 44, 46, 48) umfasst, die am Umfang der Trennwandplatte (40) angebracht sind, um einen umlaufenden Dichtungsgürtel zu bilden,
**dadurch gekennzeichnet, dass** mindestens eines der Dichtungselemente (42, 44, 46, 48) der Trennwand (26) einen an der Trennwandplatte (40) befestigten Sockel (50) umfasst und dass das oder die Dichtungselemente ferner einen lösbar am Sockel befestigten Dichtungseinsatz (52) umfassen, wobei der Dichtungseinsatz (52) mit einem Befestigungsabschnitt (74), der lösbar am Sockel (50) des Dichtungselements befestigt und aus einem starren Material hergestellt ist, sowie mit mindestens einer Dichtlippe (76) versehen ist, die gegenüber dem Befestigungsabschnitt (74) auf der der Trennwandplatte (40) gegenüberliegenden Seite vorsteht und aus einem flexiblen Material hergestellt ist.

2. Kühlaufbau nach Anspruch 1, wobei der Sockel (50) des Dichtungselements starr ist und der Dichtungseinsatz (52) zumindest teilweise flexibel ist.

3. Kühlaufbau nach Anspruch 1 oder 2, wobei die Halterung des Dichtungseinsatzes (52) gegenüber dem Sockel (50) des Dichtungselements durch eine Formkomplementarität zwischen dem Dichtungseinsatz (52) und dem Sockel (50) bewirkt wird.

4. Kühlaufbau nach einem der vorhergehenden Ansprüche, wobei der Sockel (50) des Dichtungselements zumindest teilweise eine Kante der Trennwandplatte (40) überdeckt.

5. Kühlaufbau nach Anspruch 4, wobei der Sockel (50) des Dichtungselements auf der der Kante der Trennwandplatte (40) gegenüberliegenden Seite mindestens eine Nut (60; 100, 102) begrenzt, die sich entlang der Kante erstreckt und in die der Dichtungseinsatz (52) gleitend eingesetzt ist, wobei die Nut (60; 100, 102) mindestens ein in Richtung nach außen offenes Längsende aufweist.

6. Kühlaufbau nach Anspruch 5, wobei der Sockel (50) des Dichtungselements mit mindestens einer Rippe (66) versehen ist, die in die Nut (60) hinein vorsteht und mindestens ein mit dem Dichtungseinsatz (52) zusammenwirkendes Einhakelement (70) umfasst.

7. Kühlaufbau nach Anspruch 5 oder 6, wobei der Befestigungsabschnitt (74) des Dichtungseinsatzes gleitend in die Nut (60; 100, 102) des Sockels (50) des Dichtungselements eingesetzt ist.

8. Kühlaufbau nach Anspruch 7, wobei der Befestigungsabschnitt (74) des Dichtungseinsatzes (52) mindestens eine Nut (82) umfasst, in die die Rippe (66) des Sockels gleitend eingesetzt ist.

9. Kühlaufbau nach einem der vorhergehenden Ansprüche, wobei der Sockel (50) des Dichtungselements mit einer Bodenwand (54) versehen ist, die sich zumindest teilweise entlang einer Kante der Trennwandplatte (40) erstreckt.

10. Kühlaufbau nach Anspruch 9, wobei der Sockel (50) des Dichtungselements ferner mit zwei Stirnflanschen (62, 64) versehen ist, die sich von der Bodenwand (54) aus erstrecken und sich in Richtung der Trennwandplatte (40) erstrecken.

11. Kühlaufbau nach Anspruch 10, wobei die beiden Stirnflansche (62, 64) des Sockels (50) des Dichtungselements jeweils an einander gegenüberliegenden Hauptflächen der Trennwandplatte (40) anliegend angebracht sind, wobei diese Flächen die Dicke der Platte begrenzen.

12. Kühlaufbau nach Anspruch 10, wobei die beiden Stirnflansche (62, 64) des Sockels (50) des Dichtungselements innerhalb der Dicke der Trennwandplatte (40) eingebettet sind.

13. Kühlaufbau nach einem der Ansprüche, wobei der Sockel und der Dichtungseinsatz (52) des Dichtungselements zwischen sich mindestens einen Hohlraum (86) bestehen lassen.

## Claims

1. A refrigerated body of a road vehicle for transporting goods, comprising:
- two vertical side walls (14), a roof (16) and a floor (18) assembled together and forming the walls of said body, which partially delimit an interior loading space (22); and
- at least one partition wall (26) that is movable longitudinally inside the loading space (22) and movable between a storage position and a use position for partitioning the loading space, said partition wall (26) comprising a partition wall panel (40) and a plurality of sealing joints (42, 44, 46, 48) mounted around the periphery of the partition wall panel (40) so as to form a peripheral sealing belt,
**characterised in that** at least one of the sealing joints (42, 44, 46, 48) of said partition wall (26) comprises a base (50) fixed to the partition wall panel (40), and **in that** the sealing joint or joints further comprise a sealing insert (52) removably fixed to the base, the sealing insert (52) being provided with a fixing portion (74) removably fixed to the base (50) of said sealing joint and made of a rigid material, and at least one sealing lip (76) projecting from the fixing portion (74) on the side opposite the partition wall panel (40) and made of a flexible material.

2. The refrigerated body according to claim 1, wherein the base (50) of said sealing joint is rigid and the sealing insert (52) is at least partly flexible.

3. The refrigerated body according to claim 1 or 2, wherein the retention of the sealing insert (52) relative to the base (50) of said sealing joint is achieved by shape complementarity between the sealing insert (52) and the base (50).

4. The refrigerated body according to any one of the preceding claims, wherein the base (50) of said sealing joint covers at least part of an edge of the partition wall panel (40).

5. The refrigerated body according to claim 4, wherein the base (50) of said sealing joint defines, on the side opposite the edge of the partition wall panel (40), at least one groove (60; 100, 102) extending along said edge and into which the sealing insert (52) is slidably engaged, said groove (60; 100, 102) having at least one longitudinal end open towards the outside.

6. The refrigerated body according to claim 5, wherein the base (50) of said sealing joint is provided with at least one rib (66) projecting inside said groove (60) and comprising at least one hooking element (70) cooperating with the sealing insert (52).

7. The refrigerated body according to claim 5 or 6, wherein the fixing portion (74) of the sealing insert is slidably engaged inside said groove (60; 100, 102) of the base (50) of said sealing joint.

8. The refrigerated body according to claim 7, wherein the fixing portion (74) of the sealing insert (52) comprises at least one groove (82), inside which said rib (66) of the base is slidably engaged.

9. The refrigerated body according to any one of the preceding claims, wherein the base (50) of said sealing joint is provided with a bottom wall (54) extending at least partly along an edge of the partition wall panel (40).

10. The refrigerated body according to claim 9, wherein the base (50) of said sealing joint is further provided with two front flanges (62, 64) extending from the bottom wall (54) and extending towards the partition wall panel (40).

11. The refrigerated body according to claim 10, wherein the two front flanges (62, 64) of the base (50) of said sealing joint are respectively mounted in abutment against opposite main faces of the partition wall panel (40), said faces defining the thickness of said panel.

12. The refrigerated body according to claim 10, wherein the two front flanges (62, 64) of the base (50) of said sealing joint are embedded within the thickness of the partition wall panel (40).

13. The refrigerated body according to any one of the claims, wherein the base and the sealing insert (52) of said sealing joint leave at least one void space (86) between them.
